# EUROPEAN PATENT SPECIFICATION

(11) **EP 1 386 093 B1**
(45) Date of publication and mention of the grant of the patent: **08.04.2009**
(21) Application number: 01940019.1
(22) Date of filing: 12.06.2001
(51) Int. Cl.: F16D 65/847, F16D 65/12

(54) **SELF-VENTILATING DISC BRAKE ROTOR**
SELBSTBELÜFTENDER SCHEIBENBREMSENROTOR MIT AUSSEN LIEGENDEN LÜFTUNGSÖFFNUNGEN
ROTOR DE FREIN A DISQUES A AUTOVENTILATION POURVU D'EVENTS EXTERIEURS

(30) Priority: 10.05.2001 AU PR486401
(43) Date of publication of application: 04.02.2004
(73) Proprietor: Disc Brakes Australia Pty. Ltd, Silverwater, NSW 2128 (AU)
(72) Inventor: GAVIN, Stephen, Patrick, Bateau Bay, NSW 2261 (AU)
(74) Representative: Iemenschot, Johannes Andreas
(86) International application number: PCT/AU2001/000694
(87) International publication number: WO 2002/090791

(56) References cited:
- EP-A- 0 211 304
- EP-A- 0 989 321
- EP-A1- 0 701 072
- WO-A-02/064992
- DE-A- 19 505 014
- DE-A1- 4 210 448
- DE-A1- 19 819 425
- DE-U1- 9 319 490
- FR-A- 2 662 771
- GB-A- 1 156 316
- GB-A- 2 309 273
- US-A- 4 865 167
- US-A- 5 161 652
- US-A- 5 542 503
- PATENT ABSTRACTS OF JAPAN vol. 2000, no. 13, 5 February 2001 (2001-02-05) & JP 2000 274463 A (AISIN TAKAOKA LTD; AKEBONO BRAKE IND CO LTD), 3 October 2000 (2000-10-03)

## Description

This invention relates to brake apparatus. More particularly although not exclusively it discloses an improved rotor for vehicle disc brakes.

### BACKGROUND OF THE INVENTION

A ventilated rotor which relates to vehicle disc brake assemblies and in particular to an improved structure for a rotor is disclosed in US-A- 5542503 (Dunn et al). The disclosed rotor comprises two friction plates. The two friction plates are space apart by a plurality of posts with a specific structure. The posts are arranged in groups of four. A plurality of such groups are formed on the rotor in a pattern which is repeated about the circumference of the rotor. The first post and the third post are radially aligned with one another and formed symmetrically relative to a first bisecting radius which extends outwardly from the axis of rotation of the rotor. Similarly, the second post and fourth post are radially aligned with one another and are formed symmetrically relative to a second bisecting radius which extends outwardly from the axis of rotation of the rotor. The bisecting radii extend at a predetermined angle relative to one another. The four posts of the group are oriented along three tiers. The first, second and third post are formed having tear-drop cross sectional shapes. The fourth post is formed having a circular cross sectional shape.

A problem to this known rotor is that the ventilation capacity is not sufficient satisfying, which leaves room for improvement.

Existing disc brake rotors typically comprise a central hub or hat co-axial with a surrounding ring and a brake band adapted for frictional contact with brake pads on each side. With self-ventilating disc brakes there are two spaced apart parallel rings and bands provided on each rotor which are cooled by a radial flow of air outwardly through channels formed between them. This flow largely results from centrifugal forces generated by rotation of the rotor. With prior art brake rotors the flow of cooling air typically enters through vents or ports surrounding the hat on only one side of the rotor. With many vehicles however the front wheel assembly and splash plate significantly restrict or reduce this inflow of air. The result is excessive temperatures during severe braking which can cause swelling, cracking and stress fatigue in the rotor disc.

It is an object of at least preferred embodiments of the present invention to address or ameliorate the above mentioned disadvantages or at least provide a useful alternative.

Accordingly in one broad form of the invention there is provided a disc brake rotor with the features according to claim 1.

### BRIEF DESCRIPTION OF THE DRAWINGS

The currently preferred embodiment of the invention will now be described with reference to the attached drawings in which:
- figure 1: is a perspective view of a brake rotor from the outboard side.
- figure 2: is a perspective view of the rotor from the opposite inboard side.
- figure 3: is a cross-sectional view of the rotor along the lines A-A of figure 1 showing the preferred form of the vent ports.
- figure 4: is an elevation view of the outboard side of the rotor, and
- figure 5: is a detailed view showing the preferred cross-sectional shape and arrangement for the pillars.

### DETAILED DESCRIPTION OF THE PREFERRED EMBODIMENTS

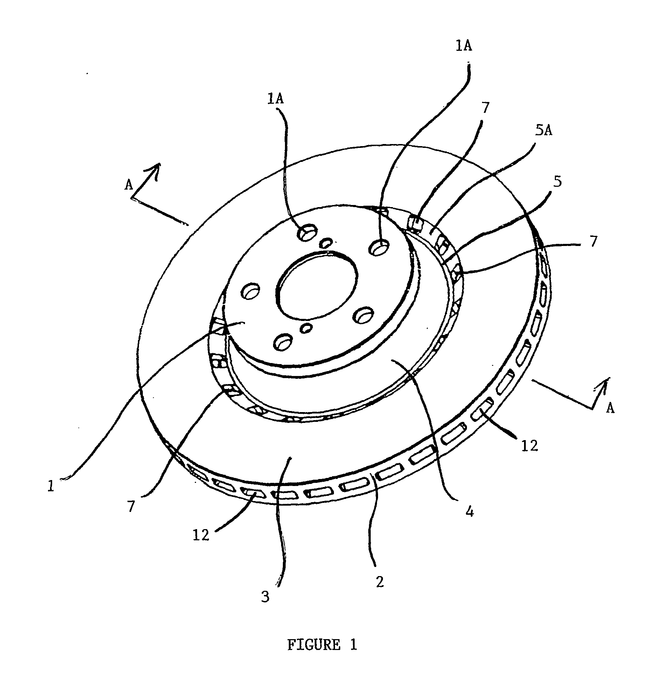

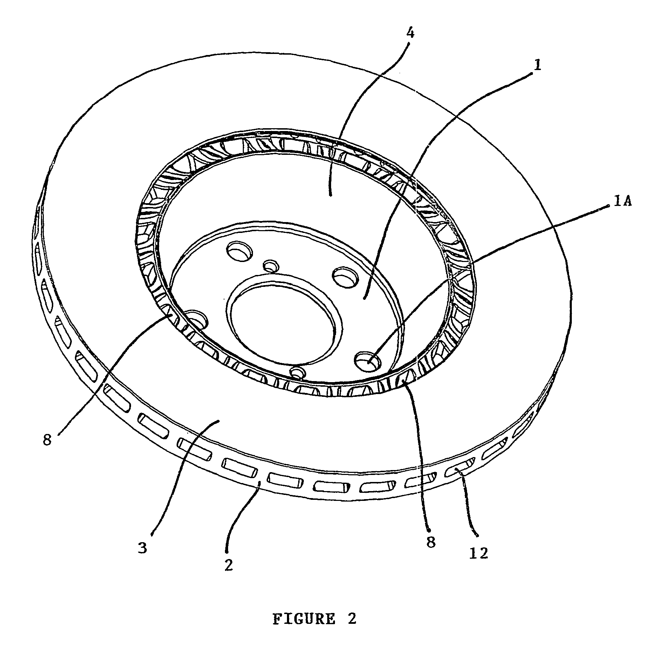

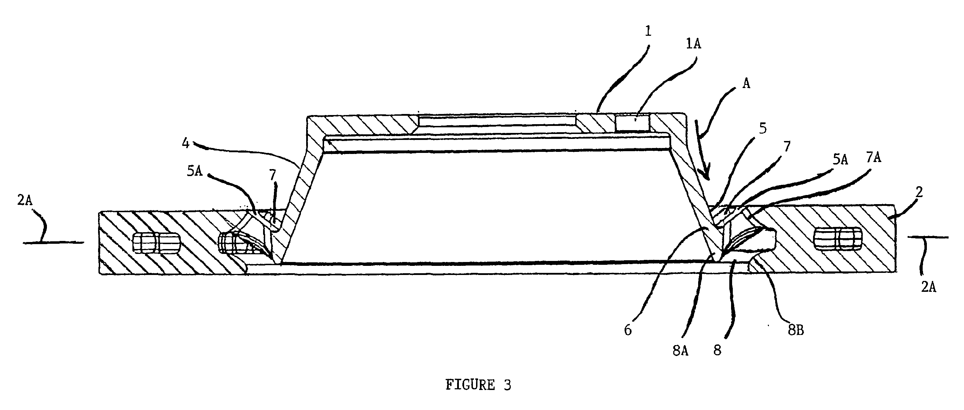

Referring first to figures 1 to 3 there is a brake rotor comprising a central hub or hat 1 for mounting a vehicle wheel by means of bolts passing through apertures 1A. surrounding the hat and co-axial with it are rings 2 which form brake bands 3 on the inboard and outboard sides for engagement with brake pads (not shown) The rings 2 are supported in a spaced apart parallel configuration by pillars with radial ventilation channels formed between them as described in more detail later. In accordance with a preferred embodiment of the invention the sides 4 of the hat or hub are inclined outwardly at about 4 degrees as best shown in figure 3. The outer periphery of the hat leads into a deep heat dam 5. This construction closely aligns the web 6 with the centre-line 2A of the rotor rings 2 to reduce vibration, better defines a heat distortion point for the rotor and also facilitates a smooth flow of air into the outboard vent ports 7. These ports 7 receive a flow of cooling air unobstructed by the front wheel assembly and splash plate. They are preferably rectangular in shape and are set into the outer face 5A of the heat dam in order to pick up the air flow along inclined sides of the hat (see arrow A in figure 3). The vent outboard wall 7A preferably has a large radius surface (e.g about 20 mm) to minimise flow friction by smoothly merging into the ventilation channels between the pillars. Also shown in figures 2 and 3 are vent ports 8 leading into the ventilation channels from the inboard side of the rotor. These ports 8 are distributed around the inner periphery of the rings 2. The port walls are defined by a contoured inlet horn 8A formed by the inboard face of the tapered hat sides 4. The opposite port walls 3D are formed by the inner periphery of the rings 2. They are also contoured to lead smoothly into the ventilation channels. To assist the radial inflow of air into the ports 8 the wall 3D preferably extends out further from the rotor centre line 2A than the opposite horn 8A.

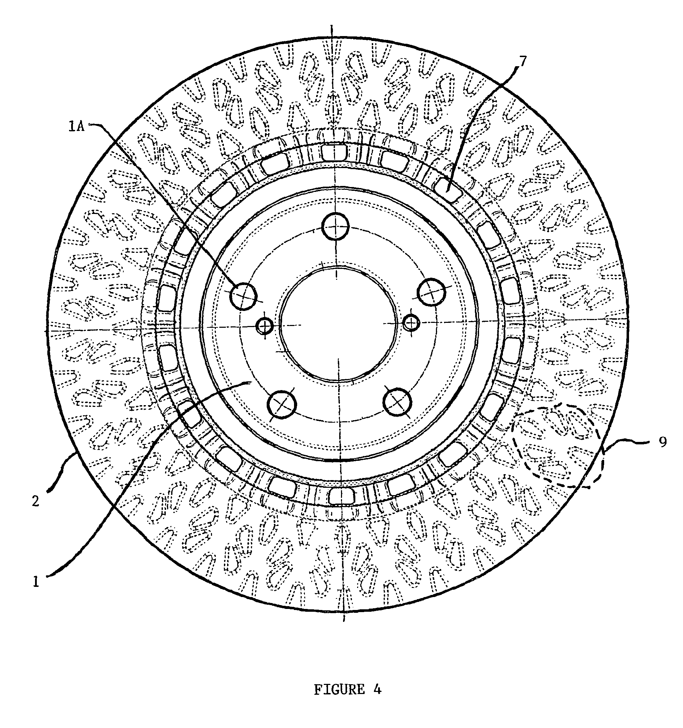

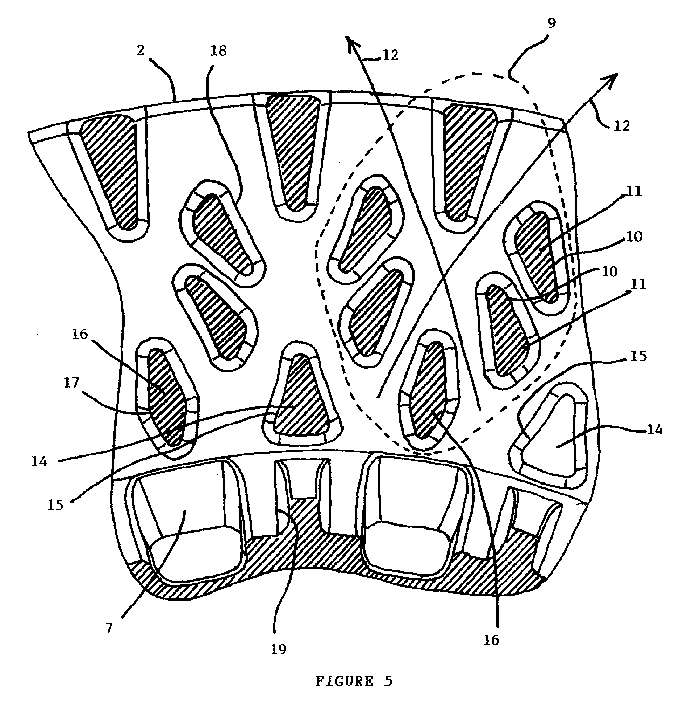

An arrangement of the support pillars between the rings is shown in figures 4 and 5. With this arrangement the pillars are disposed in repeating clusters of six units as indicated by broken line 9. Each cluster by means of the overlapping edges 10 and the elongated triangular shape of the pillars 11 defines radial air flow channels 12 out between the rings in accordance with the direction of rotation. There are also inner pillars 14 which are preferably triangular or bell shaped in cross-section so that the curved edges 15 act as air scoops to draw air in through the vent ports 7 and 8. Alternating with these pillars 14 are elongated diamond shaped pillars 16 which are asymmetrical in the radial direction so that the widest point 17 is offset toward the centre of the rotor. This shape has been found to better deflect and draw the air from the vent ports into the channels.

As the layout of each pillar cluster is preferably symmetrical with respect to the two opposite rotational directions dedicated left and right rotors are unnecessary. The air flow passes equally through either of the channels 12 in accordance with the direction of rotation.

The bases of the pillars are preferably radiused at 18 to prevent stress concentrations. Strengthening ribs 19 have also be formed on the web between the outboard ports to prevent cracking.

With further reference to figs 4 and 5 there is disclosed a disc brake rotor having a central hub coaxial with and supporting annular rings which form an inboard brake disc and an outboard brake disc for engagement with brake pads, the inboard disc and the outboard disc maintained in a parallel spaced apart configuration by pillars with channels defined between the pillars whereby in use of the rotor air is drawn in through vent means and then radially outwardly through the channels as the rotor turns, the pillars arranged in repeating clusters of six with each cluster in cross section including radially aligned inner and outer pillars with pairs of radially aligned intermediate pillars positioned symmetrically one pair on each side of a radially aligned central axis defined by the radially aligned inner and outer pillars; each pair of the pairs of radially aligned intermediate pillars defining a channel between the pillars comprising the pair; the channel offset from a radially aligned direction.

The above describes only some embodiments of the present invention and modifications obvious to those skilled in the art can be made thereto without departing from the scope of the present invention as defined in the appended claims. For example the design of the hat and brake bands as well as the shape and configuration of the vent ports and pillars may be changed according to application. Also while the rotor is preferably cast using G220 grey iron the invention extends to the use of any other suitable material.

## Claims

1. A disc brake rotor having a central hub (1) coaxial with surrounding rings (2) which form brake bands for engagement with brake pads, said rings being supported in parallel spaced apart configuration by repeating clusters (9) of pillars (11, 14, 16) with channels (12) between said pillars, wherein in use of the rotor air is drawn in through vent ports (7,8) and then radially outwardly through said channels as the rotor turns, whereby said pillars (11, 14, 16) are arranged in clusters (9) with each cluster being symmetrical with respect to rotational directions of said rotor; wherein each cluster includes six pillars and defines a respective pair of said channels (12) and cooling air passes equally through one or the other thereof in accordance with the direction of rotor rotation; wherein each cluster (9) includes pillars (11) which in cross-section are of elongated triangular shape and have overlapping edges to define said pair of channels, and wherein said disc brake rotor further includes inner pillars (14, 16), **characterized by** said inner pillars alternating between elongated diamond shaped pillars (16) and bell-shaped pillars (14) so that curved edges thereof act as air scoops to draw air in through said vent ports.

2. The disc brake rotor as claimed in claim 1 wherein there are hub sides (4) which are inclined outwardly towards the base of said hub (1) and the outer periphery of the hub (1) leads into a heat dam (5).

3. The disc brake rotor as claimed in claim 2 wherein said vent ports (7) on the outboard side are located in an outer face of said heat dam (5).

4. The disc brake rotor as claimed in claim 3 wherein the disc brake rotor further includes vent ports (8) on the inboard side of said rotor.

5. The disc brake rotor as claimed in claim 4 wherein said vent ports (8) on the inboard side of the rotor are located between an inner periphery of one of said rings (2) and a contoured inlet horn (8A) formed by an inboard face of said hub sides (4).

6. The disc brake rotor as claimed in claim 5 wherein the vent ports (7,8) on the inboard and outboard sides of the rotor lead into said channels (12) between said rings (2), said channels (12) being defined by pillars (11, 14, 16).

## Patentansprüche

1. Scheibenbremsenrotor mit einer zentralen Nabe (1), die mit umschließenden Ringen (2) koaxial angeordnet ist, welche Bremsbänder für ein Angreifen an Bremsbeläge bilden, wobei die Ringe in einer parallelen, in Abstand zueinander liegenden Konfiguration durch sich wiederholende Gruppen (9) von Trägern (11, 14, 16) mit Kanälen (12) zwischen den Trägern gehalten werden, wobei während des Rotorbetriebs Luft durch Belüftungsöffnungen (7, 8) hinein und dann radial durch die Kanäle nach außen gezogen wird, wenn sich der Rotor dreht, wobei die Träger (11, 14, 16) in Gruppen (9) angeordnet sind und jede Gruppe symmetrisch im Hinblick auf Rotationsrichtungen des Rotors ist; wobei jede Gruppe sechs Träger umfasst und ein jeweiliges Paar der Kanäle (12) bildet und Kühlluft gleichermaßen durch das eine oder das andere derselben in Übereinstimmung mit der Rotationsrichtung des Rotors hindurchgeht; wobei jede Gruppe (9) Träger (11) umfasst, die im Querschnitt eine längliche Dreieckform haben und überlagernde Kanten haben, welche das Paar Kanäle bilden, und wobei der Scheibenbremsenrotor ferner innere Träger (14, 16) umfasst; **dadurch gekennzeichnet, dass** die inneren Träger zwischen länglichen diamantförmigen Trägern (16) und glockenförmigen Trägern (14) abwechseln, so dass gekrümmte Kanten derselben als Luftschaufeln wirken, um Luft durch die Belüftungsöffnungen hindurch einzuziehen.

2. Scheibenbremsenrotor nach Anspruch 1, in welchem Nabenseiten (4) vorhanden sind, welche nach außen in Richtung der Basis der Nabe (1) schräg verlaufen und der äußere Umfang der Nabe (1) in einen Wärmedamm (5) führt.

3. Scheibenbremsenrotor nach Anspruch 2, in welchem die Belüftungsöffnungen (7) auf der Außenseite in einer Außenfläche des Wärmedamms (5) angeordnet sind.

4. Scheibenbremsenrotor nach Anspruch 3, in welchem der Scheibenbremsenrotor ferner Belüftungsöffnungen (8) auf der Innenseite des Rotors umfasst.

5. Scheibenbremsenrotor nach Anspruch 4, in welchem die Belüftungsöffnungen (8) auf der Innenseite des Rotors zwischen dem inneren Umfang einer der Ringe (2) und einem konturierten Einlasshorn (8A) angeordnet sind, das durch eine Innenfläche der Nabenseiten (4) gebildet wird.

6. Scheibenbremsenrotor nach Anspruch 5, in welchem die Belüftungsöffnungen (7, 8) auf der Innen- und Außenseite des Rotors in die Kanäle (12) zwischen den Ringen (2) führen, wobei die Kanäle (12) durch die Träger (11, 14, 16) gebildet werden.

## Revendications

1. Rotor de frein à disque comportant un moyeu central (1) coaxial à des bagues (2) qui l'entourent et qui forment des bandes de frein pour une mise en prise avec des plaquettes de frein, lesdites bagues étant supportées dans une configuration d'espacement parallèle en répétant des groupes (9) de piliers (11, 14, 16) avec des canaux (12) entre lesdits piliers, dans lequel, lors de l'utilisation du rotor, de l'air est aspiré à travers des évents (7, 8) et ensuite radialement vers l'extérieur à travers lesdits canaux alors que le rotor tourne, moyennant quoi lesdits piliers (11, 14, 16) sont agencés en des groupes (9), chaque groupe étant symétrique par rapport aux directions de rotation dudit rotor ; dans lequel chaque groupe comprend six piliers et définit une paire respective desdits canaux (12) et de l'air de refroidissement passe également à travers l'un ou l'autre de ceux-ci selon la direction de rotation du rotor ; dans lequel chaque groupe (9) comprend des piliers (11) qui ont, en coupe transversale, une forme triangulaire allongée et qui ont des bords superposés pour définir ladite paire de canaux, et dans lequel ledit rotor de frein à disque comprend en outre des piliers intérieurs (14, 16), **caractérisé en ce que** lesdits piliers intérieurs alternent entre des piliers en forme de losange allongé (16) et des piliers en forme de cloche (14) de sorte que les bords incurvés de ceux-ci agissent en tant que prises d'air pour aspirer l'air à travers lesdits évents.

2. Rotor de frein à disque selon la revendication 1, dans lequel les côtés de moyeu (4) sont inclinés vers l'extérieur vers la base dudit moyeu (1) et la périphérie extérieure du moyeu (1) mène à une gorge pare-chaleur (5).

3. Rotor de frein à disque selon la revendication 2, dans lequel lesdits évents (7) du côté extérieur sont situés dans une face extérieure de ladite gorge pare-chaleur (5).

4. Rotor de frein à disque selon la revendication 3, dans lequel le rotor de frein à disque comprend en outre des évents (8) du côté intérieur dudit rotor.

5. Rotor de frein à disque selon la revendication 4, dans lequel lesdits évents (8) du côté intérieur du rotor sont situés entre une périphérie intérieure de l'une desdites bagues (2) et un cornet d'entrée (8A) profilé formé par une face intérieure desdits côtés de moyeu (4).

6. Rotor de frein à disque selon la revendication 5, dans lequel les évents (7, 8) des côtés intérieur et extérieur du rotor mènent auxdits canaux (12) entre lesdites bagues (2), lesdits canaux (12) étant définis par des piliers (11, 14, 16).
